(19) Europäisches Patentamt / European Patent Office / Office européen des brevets

(11) **EP 3 904 123 A1**

(12) **EUROPEAN PATENT APPLICATION**

(43) Date of publication:
03.11.2021 Bulletin 2021/44

(51) Int Cl.:
***B60C 11/24*** *(2006.01)*

(21) Application number: 21170147.9

(22) Date of filing: 23.04.2021

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 28.04.2020 JP 2020079460

(71) Applicant: **TDK Corporation**
**Tokyo 103-6128 (JP)**

(72) Inventors:
• **SENRIUCHI, Tadao**
**Tokyo, 103-6128 (JP)**
• **YONEDA, Sadaharu**
**Tokyo, 103-6128 (JP)**

(74) Representative: **Epping - Hermann - Fischer**
**Patentanwaltsgesellschaft mbH**
**Schloßschmidstraße 5**
**80639 München (DE)**

(54) **TIRE DETERIORATION DETECTION SYSTEM, TIRE WEAR DETECTION SYSTEM AND TIRE WEAR DETECTION METHOD**

(57)    A tire deterioration detection system, a tire wear detection system and a tire wear detection method can suppress influences caused by curving of a vehicle.

The tire deterioration detection system estimates deterioration state, for example, wear state of each tire of a vehicle. A calculation part derives a moving length of each tire in view of an effect caused by curving based on a traveling path of the vehicle obtained from position data by a GPS receiver and an outer diameter of the tire from the moving length of the tire, so that calculation part derives a wear loss of the tire and estimate the wear state of the tire from the wear loss of the tire.

## FIG. 1

1 Tire deterioration detection system

**Description**

TECHNICAL FIELD

The present invention relates to a tire deterioration detection system, a tire wear detection system and a tire wear detection method for vehicles.

BACKGROUND ART

Patent Document 1 below discloses a tire uneven wear detection method. In this method, acceleration sensors installed in the central part in the width direction and the tire shoulder part on the inner surface side of a tire tread are used to detect an acceleration waveform in the central part in the width direction and an acceleration waveform in the tire radial direction of the tire shoulder part of the tire tread, respectively, in order to detect the uneven wear of the tire based on the detected acceleration waveforms.

Patent Document 2 below discloses a tire wear loss estimation device. This device comprises a GPS receiver, a vehicle speed detection means for detecting the speed of a vehicle from position data obtained by this GPS receiver, wheel rotational speed measuring means for measuring the rotational speed of a wheel and wear loss estimating means for estimating the wear loss of a tire from the above detected vehicle speed and wheel rotational speed.

PRIOR ART DOCUMENTS

Patent Documents

[Patent Document 1] Japanese Laid-Open Patent Publication No.2013-136297
[Patent Document 2] Japanese Laid-Open Patent Publication No.2008-143460

SUMMARY OF THE INVENTION

PROBLEM TO BE SOLVED BY THE INVENTION

While a vehicle is travelling around a curve, stress in a lateral direction is applied to tires. Therefore, in the method of Patent Document 1, it is assumed that data obtained from the acceleration sensors when the vehicle is travelling straight differs from data when the vehicle is travelling around a curve even under the same wear state. While the vehicle is travelling around a curve, there arises a difference in rotational speed between inner wheels and outer wheels. Therefore, in the device of Patent Document 2, it is assumed that the wheel rotational speed to be measured when the vehicle is travelling around a curve differs from the wheel rotational speed when the vehicle is running straight even at the same vehicle speed. This difference between when the vehicle is travelling straight and when the vehicle is travelling around a curve may become a factor causing an error in wear detection. This problem also occurs in the case of the detection of deterioration other than wear.

It is an object of the present invention which was made in view of this situation to provide a tire deterioration detection system, a tire wear detection system and a tire wear detection method, all of which are capable of suppressing influences caused by curve driving of a vehicle.

MEANS FOR SOLVING PROBLEM

A first aspect of the present invention relates to a tire deterioration detection system for vehicles. The tire deterioration detection system includes:

a state acquisition means for acquiring a state data of a tire of a vehicle obtained by travelling of the vehicle;
a curvature radius acquisition means for acquiring a curvature radius data of a traveling path of the vehicle; and
an estimating means for estimating a deterioration state of the tire based the state data and the curvature radius data during travelling which is the basis of the state data.

The state data may be a data on number of rotations of the tire, and the deterioration state is a wear state.

The tire deterioration detection system may include a path length acquisition means for acquiring a path length data of the traveling path of the vehicle, wherein

the estimating means derives a moving length of the tire from the curvature radius data and the path length data, and estimates the wear state of the tire based on the moving length of the tire and the numbers of rotations of the tire while moving the moving length.

The curvature radius acquisition means and the path length acquisition means may include a receiver of a satellite positioning system.

The estimating means may estimate the deterioration state of the tire only from the state data obtained when a curvature radius of the traveling path is a predetermined length or more,

the predetermined length is a length at which an error between a path length of the traveling path of the vehicle and a moving length of the tire becomes a predetermined value, and

the predetermined value is 1/10 of the ratio of an allowable maximum wear loss to an outer diameter of the tire when it is new.

The estimating means may estimate the deterioration state of the tire based on the state data and the curvature radius data when the vehicle travels a predetermined distance or more, and

when a new tire and a worn tire being worn by an allowable maximum wear loss with respect to the new tire move the predetermined distance, a difference between number of rotations of the new tire and number of rotations of the worn tire is 5 rotations or more.

The state acquisition means includes a distortion sensor or an acceleration sensor.

The distortion sensor or the acceleration sensor may be arranged at a plurality of positions in a peripheral direction of the tire.

The tire deterioration detection system may include a road surface state acquisition means for acquiring a road surface state data of the travelling path of the vehicle or a weather acquisition means for acquiring a weather data at a position of the vehicle, wherein

the estimating means estimates the deterioration state of the tire also using the road surface state data or the weather data during travelling as the basis of the state data.

The tire deterioration detection system may include a display part for displaying an estimation result in the estimating means, wherein the display part is a screen of a car navigation system mounted on the vehicle or a screen of a portable terminal.

A second aspect of the present invention relates to a tire wear detection system for vehicles. The tire deterioration detection system includes:

a number-of-rotation deriving means for deriving number of rotations of a tire of a vehicle;
a moving length deriving means for deriving a moving length of the tire;
an outer diameter deriving means for deriving an outer diameter of the tire based on number of rotations and the moving length of the tire while the vehicle travels a predetermined distance; and
an estimating means for estimating a wear state of the tire based on the outer diameter of the tire.

A third aspect of the present invention relates to a tire wear detection method for vehicles. The tire wear detection method includes the steps of:

deriving number of rotations and a moving length of a tire of a vehicle while the vehicle travels a predetermined distance;
calculating an outer diameter of the tire based on the number of rotations and the moving length of the tire; and
estimating a wear state of the tire based on the outer diameter of the tire.

It is to be noted that any arbitrary combination of the above-described structural components as well as the expressions according to the present invention changed among a system and so forth are all effective as and encompassed by the present aspects.

EFFECT OF THE INVENTION

According to the present invention, there can be provided a tire deterioration system, a tire wear detection system and a tire wear detection method all of which are capable of suppressing an influence caused by curve driving of a vehicle.

BRIEF DESCRIPTION OF DRAWINGS

Fig. 1 is a schematic plan view of a tire deterioration detection system 1 according to an embodiment of the present invention.

Fig. 2 is a front sectional view showing a location of a sensor unit 4 of the tire deterioration detection system 1.

Fig. 3 is a schematic sectional side view showing a ground contact state between a road surface 7 and a part of an outer tire surface at which right behind of a mounting part of the sensor unit 4 is positioned.

Fig. 4 is a waveform diagram showing an example of the waveform of a sensing signal in the sensor unit 4.

Fig. 5 is a schematic diagram showing outer diameter Rn when a tire 3 is new and allowable maximum wear loss Rw.

Fig. 6 is a schematic diagram showing a required travelling distance D of a vehicle 2 for the estimation of the deterioration state of the tire 3.

Fig. 7 is a schematic diagram showing an example of the locus of each tire 3 when the vehicle 2 is travelling around a curve.

Fig. 8 is a functional block diagram of the tire deterioration detection system 1.

Fig. 9 is a flow chart of an estimation of a deterioration state of the tire 3 in the tire deterioration detection system 1.

EMBODIMENTS FOR CARRYING OUT THE INVENTION

Preferred embodiments of the present invention will now be described in detail with reference to the drawings. The same or equivalent constituent parts, members, etc., shown in the drawings are designated by the same reference numerals and will not be repeatedly described as appropriate. The embodiments are not intended to limit the invention but are mere exemplifications, and all features or combinations thereof described in the embodiments do not necessarily represent the intrinsic natures of the invention.

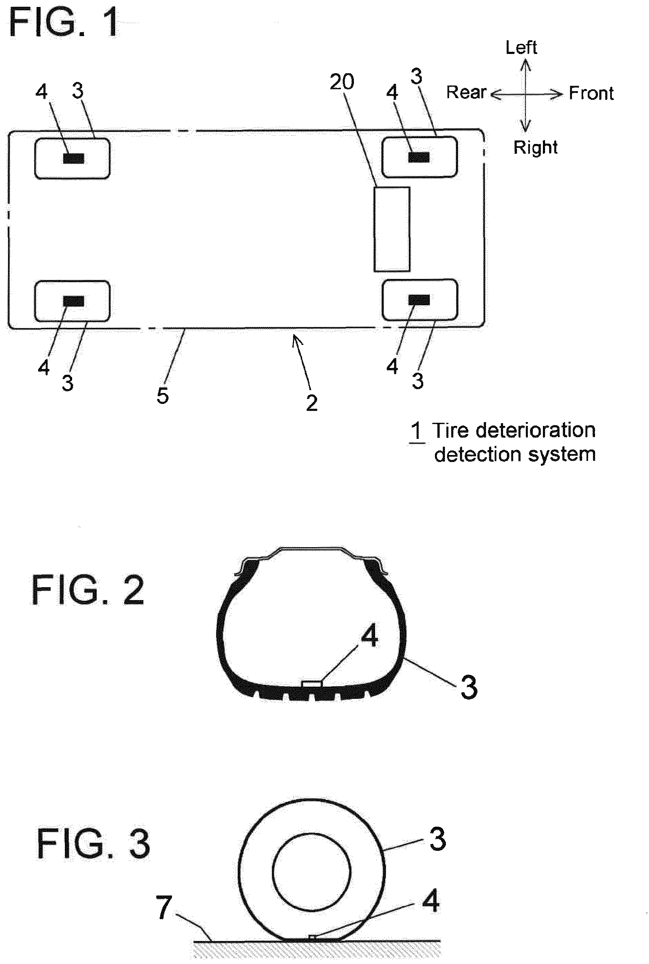

This embodiment of the present invention relates to a tire deterioration detection system 1. The tire deterioration detection system 1 is a system for estimating a deterioration state of each tire 3 of a vehicle 2 and a tire wear detection system for estimating a wear state of each tire 3. The front and rear directions and right and left directions which cross each other of the vehicle 2 are defined by Fig. 1. The vehicle 2 includes a car body 5 and four tires 3 attached to the car body 5. The tires 3 consist of left front wheel, right front wheel, left rear wheel and right rear wheel tires. The tire deterioration detection system 1 comprises sensor units 4 mounted on the respective tires 3 and a user terminal 20.

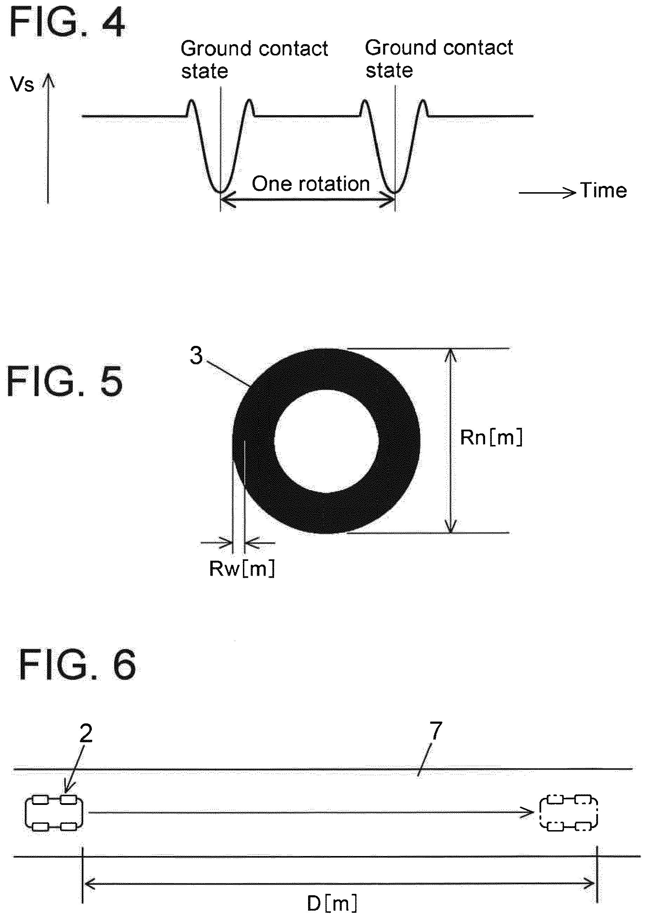

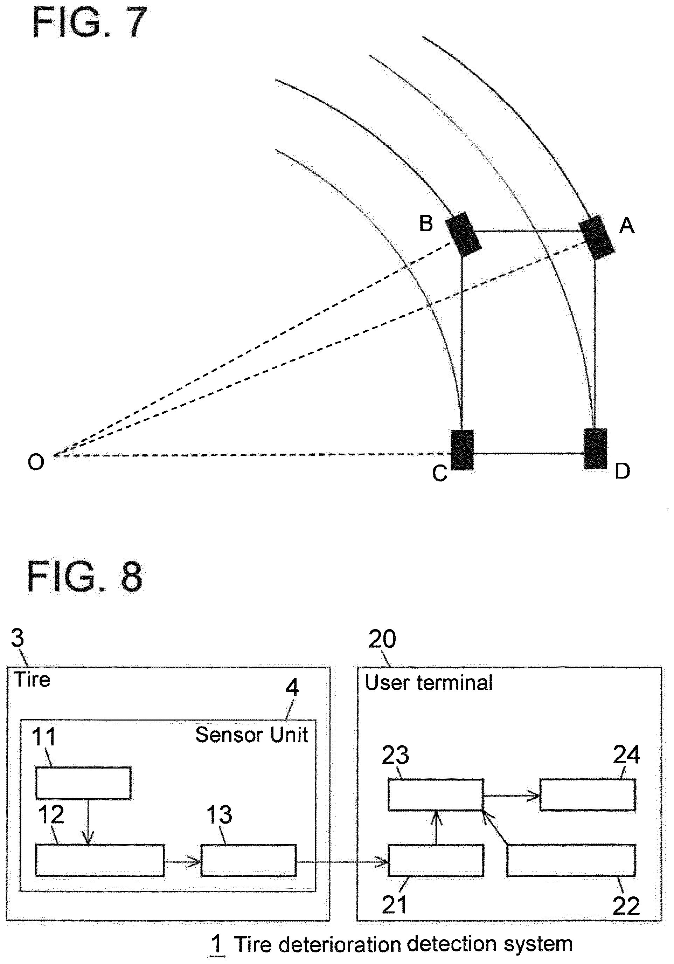

Each of the sensor units 4 is provided at the center in the lateral direction of the inner peripheral surface of the tire 3 as shown in Fig. 2. The sensor unit 4 obtains a sensing signal whose level is changed before and after the ground contact state shown in Fig. 3 by the rotation of the tire 3. Fig. 4 shows an example of the waveform of the sensing signal. The sensing signal is an output signal of a distortion sensor 11 included in the sensor unit 4 and shown in Fig. 8. The sensing signal is an example of state data.

As shown in Fig. 4 of exemplification, the waveform of the sensing signal obtained during the rotation of the tire 3 takes the minimum value each time the ground contact state shown in Fig. 3. During the period from a certain minimum value to the next minimum value, the tire 3 rotates once. Therefore, the number of rotations of the tire 3 during a desired period can be specified from the sensing signal. That is, the sensing signal is number-of-rotation data capable of specifying the number of rotations of the tire 3. A plurality of the sensor units 4 may be provided in the peripheral direction of the tire 3, for example, at equal angular intervals. In this case, a rotation less than one rotation of the tire, for example, half rotation or 1/4 rotation can be detected.

Fig. 5 schematically shows the outer diameter Rn of the tire 3 when it is new (not worn out) and the allowable maximum wear loss Rw. When the tire 3 is worn out and its outer diameter becomes small, the number of rotations of the tire 3 increases in the case of moving the same distance. By utilizing this, the wear state of the tire 3 is estimated in this embodiment. Fig. 6 schematically shows the required travelling distance D of the vehicle 2 for the estimation of the deterioration state of the tire 3. The required travelling distance D is the distance of a straight line from a start point to an end point if the traveling path is straight as shown in Fig. 6. Since the moving distances of all parts of the vehicle 2 are the same when the traveling path is straight, the required travelling distance D may be derived based on any part of the vehicle 2. Meanwhile, when the traveling path includes a curve, the required travelling distance D is the length of a path along the traveling path. When the traveling path includes a curve, the required travelling distance D should be derived based on the locus of the tire 3 whose moving distance is the shortest (the locus of the left rear wheel positioned at point C in the example of Fig. 7).

The required travelling distance D is set to ensure that the difference $\Delta T$ in the number of rotations between the tire 3 which is worn by the allowable maximum wear loss Rw (to be referred to as "worn tire" hereinafter) and a new tire 3 (to be referred to as "new tire" hereinafter) becomes a predetermined value or more, for example, 5 or more. For example, when the tire size is 195/65R1591S and Rw is 5 mm, the outer peripheral length of the new tire is 1,993 mm and the outer peripheral length of the worn tire is 1,961 mm, and when the vehicle travels 630 m, the number of rotations of the new tire is 316 and the number of rotations of the worn tire is 321. The difference $\Delta T$ in the number of rotations is represented by the following formula.

[formula 1]

$$\Delta T = \frac{D}{\pi(R-Rw)} - \frac{D}{\pi R}$$

Fig. 7 schematically shows an example of the locus of each tire 3 when the vehicle 2 travels around a curve. In Fig. 7, the point O shows the center of the curvature of the curve. The point A shows the position of the right front wheel. The point B shows the position of the left front wheel. The point C shows the position of the left rear wheel. The point D shows the position of the right rear wheel. When the vehicle 2 travels around a curve, the moving lengths (locus lengths) of the tires 3 are not the same. Therefore, when the vehicle 2 moves only the required travelling distance D, and the traveling path includes a curve, the moving length of the tire 3 may deviate from the required travelling distance D. A description is subsequently given of the correction of this deviation.

The locus of the traveling path of the vehicle 2 is derived from a receiving signal of a GPS receiver 22 shown in Fig. 8. The path length and curvature radius of the traveling path can be derived from the locus of the traveling path. That is, the GPS receiver 22 constitutes curvature radius acquisition means for acquiring curvature radius data from which the curvature radius of the traveling path can be specified, and path length acquisition means for acquiring path length data from which the path length of the traveling path can be specified.

In this embodiment, it can be considered that the GPS receiver 22 is located on the front side of the right front seat of the vehicle 2 at the same position as the right front wheel. In this case, the length of line segment OA that is the curvature radius of the locus of the right front wheel is the same as the curvature radius of the traveling path of the vehicle 2 and a known value. Meanwhile, the lengths of line segments AB and CD are tread widths and known values. The lengths of line segments BC and AD are wheelbases and known values.

Using these known values, the curvature radius of the locus of the tires 3 except for the right front wheel (lengths of the line segments OB, OC and OD) are represented by the following formulas, respectively.

[formulas 2]

$$OB = \sqrt{\left(\sqrt{OA^2 - AD^2} - CD\right)^2 + AD^2}$$

$$OC = \sqrt{OA^2 - AD^2} - CD$$

$$OD = \sqrt{OA^2 - AD^2}$$

Even when the GPS receiver 22 is located at an arbitrary position different from the position of the right front wheel, the curvature radius of the tires 3 can be derived.

The ratio of the moving lengths of the tires 3 when the vehicle travels around a curve is the same as the ratio of the curvature radius of the locus. Therefore, the moving lengths of the tires 3 except for the right front wheel can be derived from the moving length of the right front wheel which is the same as the path length of the traveling path of the vehicle 2. For actual travelling, travelling around a curve which differ in curvature radius and travelling straight may be mixed. Therefore, it is recommended to divide the travelling path of the required travelling distance D into a plurality of sections, derive the moving length of each tire 3 in each path section (each divided section) and sum up the moving lengths of each tire 3 in the path sections.

When the vehicle 2 travels the required travelling distance D, the moving lengths of the right front wheel, left front wheel, left rear wheel and right rear wheel are represented by Da, Db, Dc and Dd, the outer diameters of these wheels are represented by Ra, Rb, Rc and Rd, and the numbers of rotations of these wheels are represented by Ta, Tb, Tc and Td, respectively, the following expressions are obtained.

[formulas 3]

$$Ra=\frac{Da}{\pi \times Ta}, \quad Rb=\frac{Db}{\pi \times Tb}, \quad Rc=\frac{Dc}{\pi \times Tc}, \quad Rd=\frac{Dd}{\pi \times Td}$$

It can be judged that when the outer diameter of each tire 3 is (Rn-Rw) or more, the wear loss is within the allowable range and when the outer diameter is less than (Rn-Rw), the wear loss is outside the allowable range.

Fig. 8 is a functional block diagram of the tire deterioration detection system 1. The sensor unit 4 has a distortion sensor 11 which is state acquisition means, a signal processing part 12 and a transmission part 13. The distortion sensor 11 is, for example, a thin film piezoelectric element chip having an electrode provided on both sides of a piezoelectric thin film (thin film PZT) and mounted on an unshown flexible substrate. The transmission part 13 is a radio communication module for short-range radio communication such as Bluetooth (registered trademark).

The signal processing part 12 carries out processing such as noise removal, amplifying or analog-digital conversion on the output signal of the distortion sensor 11. The transmission part 13 transmits the output signal of the distortion sensor 11 which was processed by the signal processing part 12 to the receiving part 21 of the user terminal 20. The power source of the sensor unit 4 is, for example, a button battery (not shown) provided in the tire 3.

The user terminal 20 may be a computer (on-vehicle computer) which constitutes a car navigation system of the vehicle 2 or a portable terminal such as a smart phone or tablet terminal. The user terminal 20 has a receiving part 21, a GPS (Global Positioning System) receiver 22, a calculation part 23 and a display part 24. The receiving part 21 is a radio communication module for short-range radio communication such as Bluetooth (registered trademark). The GPS receiver 22 is an example of a satellite positioning system. The calculation part 23 includes a microcontroller which can carry out various arithmetic processing required for the estimation of the deterioration state of the tire 3. The display part 24 reports various information to a user on a screen.

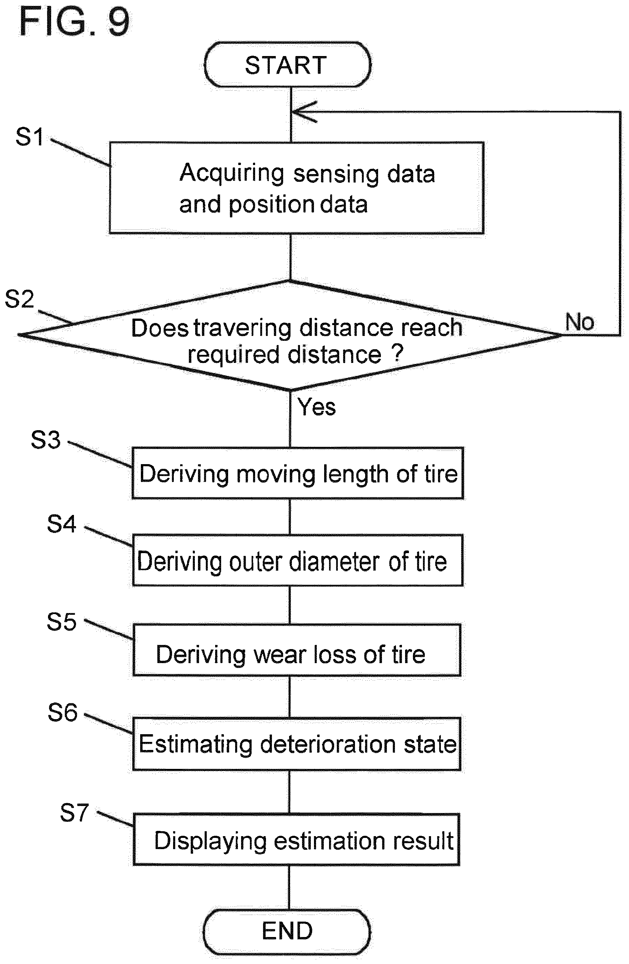

Fig. 9 is a flowchart of the estimation of the deterioration state of the tire 3 in the tire deterioration detection system 1. This flowchart shows a processing flow when the calculation part 23 runs a tire deterioration detection program (tire wear detection program). The start of this flowchart may be triggered at a time when the vehicle 2 has travelled a predetermined distance after the execution of the previous tire deterioration detection program or when the user has given a start instruction.

The calculation part 23 receives signals (sensing data) which were received by the receiving part 21 from the sensor units 4 of the tires 3 and acquires the current position data of the vehicle 2 from the GPS receiver 22 (S1). The calculation part 23 continues to acquire the sensing data and the position data until the travelling distance of the vehicle 2 reaches the required travelling distance D (No of S2, S1). When the travelling distance of the vehicle 2 reaches the required travelling distance D (Yes of S2), the calculation part 23 derives the moving lengths of the tires 3 in view of an influence caused by curving based on the travelling path of the vehicle 2 obtained from the position data stored in the step S1 (S3).

The calculation part 23 derives the outer diameters of the tires 3 from the moving lengths of the tires 3 (S4). The calculation part 23 derives the wear loss of each tire 3, that is, the difference between the current outer diameter of each tire 3 and the outer diameter when the tire 3 was new (S5). The calculation part 23 estimates the deterioration state (wear state) of each tire 3 from the wear loss of each tire 3 (S6) . Stated more specifically, the calculation part 23 judges whether the wear loss of each tire 3 exceeds the allowable maximum wear loss Rw or not. The calculation part 23 displays the estimation result of the deterioration state of each tire 3 on the display part 24 (S7). For example, when the wear loss of the right front wheel exceeds the allowable maximum wear loss Rw, the calculation part 23 displays a message or illustration that the wear loss of the right front wheel exceeds the allowable value.

In the tire deterioration detection system 1, when the one-time traveling of the vehicle 2 does not reach the required travelling distance D, the deterioration state of each tire 3 may be estimated from data obtained from a plurality of times of travelling. Alternately, data obtained from travelling a distance shorter than the required travelling distance D may be discarded and the deterioration state of each tire 3 may be estimated based on data obtained from one-time travelling reaching the required travelling distance D.

According to this embodiment, the following effects can be obtained.

(1) In the tire deterioration detection system 1, the moving length of each tire 3 is derived from the travelling path length of the vehicle 3 including the curving of the vehicle 2 to estimate the wear loss of each tire 3 from the moving length of each tire 3 and the number of rotations of each tire 3. Therefore, an influence on deterioration state estimation by curving can be suppressed.

(2) Sine the traveling path of the vehicle 2 is derived from position data received by the GPS receiver 22, a GPS receiving function which many vehicles and portable terminals have can be used advantageously.

(3) Since the required travelling distance D is set to ensure that the difference ΔT in the number of rotations between a worn tire and a new tire becomes a predetermined value, for example, 5 or more, wear determination accuracy can be enhanced. When an "n" ("n" is an integer of 2 or more) number of distortion sensors 11 are provided in the peripheral direction of the tire 3 at equal angular intervals to enable the detection of even 1/n rotation of the tire 3, an "n" number of ground contact detection signals are obtained per one rotation of the tire 3. Therefore, the required travelling distance D may be set to ensure that n x ΔT becomes the above predetermined value (for example, 5) or more.

While the invention has been described in its preferred embodiments, it is to be understood by a person having ordinary skill in the art that variations may be made on each constituent element and process of the embodiments without departing from the scope of the following claims. Variations of the invention will be described hereinafter.

Data obtained when the vehicle 2 travels around a curve may be not used to estimate the deterioration state of the tire 3. In this case, the calculation part 23 monitors the changes of position data from the GPS receiver 22 and does not include travelling distance while the vehicle is travelling around a curve as the required travelling distance D. After the travelling distances while the vehicle 2 is travelling straight are summed up by the calculation part 23 and reach the required travelling distance D or after the total of continuous straight travelling distances reaches the required travelling distance D, the calculation part 23 may carry out steps after the step 3 shown in Fig. 9. Without using data while the vehicle is travelling around a curve for the estimation of the deterioration state of the tire 3, an influence on the estimation of the deterioration state by curving can be suppressed.

The calculation part 23 may consider that the vehicle 2 is travelling straight when the curvature radius of the travelling path is a predetermined length or more and that the vehicle 2 is travelling around a curve when the curvature radius is less than the above predetermined length. The above predetermined length is set to ensure that an error between the length of the traveling path of the vehicle 2 and the moving length of each tire 3 becomes a predetermined value. The above predetermined value is a value obtained by multiplying the ratio (Rw/Rn) by the allowable error, where the ratio (Rw/Rn) is the allowable maximum wear loss Rw to the outer diameter Rn of the tire 3 when it is new. For example, when the tire size is 195/65R15 91S, the wheelbase is 2.7 m, the tread width is 1.54 m, the position of the GPS receiver 22 is the same position as the right front wheel, Rw/Rn is 2 % and the allowable error is 10 %, the above predetermined value is calculated as 0.2 % and the above predetermined length is calculated as about 800 m. The allowable error may be 20 %, preferably 10 % or less.

When the road surface 7 is unpaved, wet or covered with snow or the weather is rainy or snowy, it is assumed that there may occur the idling or slipping of the tire 3, thereby causing an adverse effect on the estimation of the deterioration state of the tire 3. Therefore, when the calculation part 23 detects the state of the road surface 7 which is, for example, unpaved, wet or covered with snow or the weather at the current location of the vehicle 2 which is rainy or snowy, it may not carry out the estimation of the deterioration state of the tire 3. For example, the state of the road surface 7 at the current location of the vehicle 2 may be estimated by the calculation part 23 from an image of an unshown on-vehicle camera which can capture the road surface 7. In this case, the on-vehicle camera and the calculation part 23 are examples of road surface state acquisition means. The state of the road surface 7 and the weather at the current location of the vehicle 2 may be estimated by the calculation part 23 from weather data on the current location specified from the position data of the GPS receiver 22 obtained through a network such as internet. In this case, the GPS receiver 22 and the calculation part 23 are examples of road surface state acquisition means and weather acquisition means.

In the sensor unit 4, the distortion sensor 11 may be substituted by an acceleration sensor. The sensor unit 4 may be provided on the car body 5 side. In this case, a wheel speed sensor attached to a control system such as ABS (Anti-lock Brake System), TCS (Traction Control System) or ESC (Electronic Stability Control) etc. may be used as state acquisition means. The calculation part 23 can derive the number of rotations of the tire 3 from the sensing signal of the wheel speed sensor. When the sensor unit 4 is provided on the car body 5 side, the receiving part 21 of the user terminal 20 may receive the sensing signal by cable communication.

The state data on the deterioration state of the tire 3 acquired by the sensor unit 4 may not be limited to the number of rotations of the tire 3 and may be the hardness of the tire 3. Rubber constituting the tire 3 becomes hard when deterioration progresses. When the tires 3 differ in hardness, the sensing signals of the distortion sensors 11 obtained by traveling become different. Even when the acceleration sensors are used in place of the distortion sensors 11, if the tires 3 differ in hardness, the sensing signals become different. Therefore, by estimating the hardness of each tire 3 by the sensing signal obtained by traveling, the deterioration state except for the wear state of the tire, for example, aging deterioration state can be estimated. Even when the tires 3 have the same hardness, a sensing signal while the vehicle 2 is travelling straight becomes different from a sensing signal while the vehicle 2 is travelling around a curve. Therefore, to estimate the hardness of the tire 3, not a sensing signal when the vehicle 2 is travelling around a curve but only a sensing signal while the vehicle 2 is travelling straight should be used.

The number of tires 3 of the vehicle 2 is not limited to 4 and may be 2, 3 or other arbitrary number. The distortion sensor 11, the signal processing part 12 and the transmission part 13 shown in Fig. 8 may be different units and separated from one another without being integrated into a single unit. When a plurality of the distortion sensors 11 are installed in the peripheral direction of the tire 3, they may share one transmission part 13. For the detection of the wear of the tire 3, which wear level the tire 3 corresponds to may be judged by setting a plurality of wear levels according to different threshold values of wear loss. To judge whether the vehicle 2 is travelling straight or around a curve, means for detecting the rotation position of the steering wheel of the vehicle 2 may be used. When the rotation angle of the steering wheel is a predetermined value or more, it may be judged that the vehicle 2 is travelling around a curve. The rotation angle of the steering wheel and the curvature radius of the traveling path have a negative correlation. Therefore, the rotation angle of the steering wheel can be considered as curvature radius data.

EXPLANATION OF REFERENCE NUMERALS

1 tire deterioration detection system, 2 vehicle, 3 tire, 4 sensor unit, 5 car body, 7 road surface, 11 distortion sensor, 12 signal processing part, 13 transmission part, 20 user terminal, 21 receiving part, 22 GPS receiver, 23 calculation part, 24 display part

**Claims**

1.    A tire deterioration detection system for vehicles, comprising:

   a state acquisition means for acquiring a state data of a tire of a vehicle obtained by travelling of the vehicle;
   a curvature radius acquisition means for acquiring a curvature radius data of a traveling path of the vehicle; and
   an estimating means for estimating a deterioration state of the tire based the state data and the curvature radius data during travelling which is the basis of the state data.

2.    The tire deterioration detection system according to claim 1, wherein the state data is a data on number of rotations of the tire, and the deterioration state is a wear state.

3.    The tire deterioration detection system according to claim 2, comprising a path length acquisition means for acquiring a path length data of the traveling path of the vehicle, wherein
   the estimating means derives a moving length of the tire from the curvature radius data and the path length data, and estimates the wear state of the tire based on the moving length of the tire and the numbers of rotations of the tire while moving the moving length.

4.    The tire deterioration detection system according to claim 3, wherein the curvature radius acquisition means and the path length acquisition means include a receiver of a satellite positioning system.

5.    The tire deterioration detection system according to claim 1 or 2, wherein
   the estimating means estimates the deterioration state of the tire only from the state data obtained when a curvature radius of the traveling path is a predetermined length or more,
   the predetermined length is a length at which an error between a path length of the traveling path of the vehicle and a moving length of the tire becomes a predetermined value, and
   the predetermined value is 1/10 of the ratio of an allowable maximum wear loss to an outer diameter of the tire when it is new.

6.    The tire deterioration detection system according to any one of claims 1 to 5, wherein
   the estimating means estimates the deterioration state of the tire based on the state data and the curvature radius data when the vehicle travels a predetermined distance or more, and
   when a new tire and a worn tire being worn by an allowable maximum wear loss with respect to the new tire move the predetermined distance, a difference between number of rotations of the new tire and number of rotations of the worn tire is 5 rotations or more.

7.    The tire deterioration detection system according to any one of claims 1 to 6, wherein the state acquisition means includes a distortion sensor or an acceleration sensor.

8.    The tire deterioration detection system according to claim 7, wherein the distortion sensor or the acceleration sensor is arranged at a plurality of positions in a peripheral direction of the tire.

9. The tire deterioration detection system according to any one of claims 1 to 8, comprising a road surface state acquisition means for acquiring a road surface state data of the travelling path of the vehicle or a weather acquisition means for acquiring a weather data at a position of the vehicle, wherein
the estimating means estimates the deterioration state of the tire also using the road surface state data or the weather data during travelling as the basis of the state data.

10. The tire deterioration detection system according to any one of claims 1 to 9, comprising a display part for displaying an estimation result in the estimating means, wherein the display part is a screen of a car navigation system mounted on the vehicle or a screen of a portable terminal.

11. A tire wear detection system for vehicles, comprising:

a number-of-rotation deriving means for deriving number of rotations of a tire of a vehicle;
a moving length deriving means for deriving a moving length of the tire;
an outer diameter deriving means for deriving an outer diameter of the tire based on number of rotations and the moving length of the tire while the vehicle travels a predetermined distance; and
an estimating means for estimating a wear state of the tire based on the outer diameter of the tire.

12. A tire wear detection method for vehicles, comprising the steps of:

deriving number of rotations and a moving length of a tire of a vehicle while the vehicle travels a predetermined distance;
calculating an outer diameter of the tire based on the number of rotations and the moving length of the tire; and
estimating a wear state of the tire based on the outer diameter of the tire.

# FIG. 1

20  4  3

Left

Rear ←→ Front

Right

4  3

4  3

4  3

4  3

5

2

1 Tire deterioration
detection system

# FIG. 2

4

3

# FIG. 3

3

7

4

# FIG. 4

# FIG. 5

# FIG. 6

# FIG. 7

# FIG. 8

1 Tire deterioration detection system

# FIG. 9

```
          ┌─────────────┐
          │    START    │
          └─────────────┘
                 │
                 ▼
   S1   ┌─────────────────────────┐
        │  Acquiring sensing data │
        │  and position data      │
        └─────────────────────────┘
                 │
                 ▼
   S2         ◇─────────────────────◇
          ◇ Does travering distance reach ◇──── No ──┐
          ◇   required distance ?  ◇               │
                ◇─────────◇                         │
                 │ Yes                              │
                 ▼                                  │
   S3   ┌─────────────────────────┐                │
        │ Deriving moving length of tire │         │
        └─────────────────────────┘                │
                 │                                  │
                 ▼                                  │
   S4   ┌─────────────────────────┐                │
        │ Deriving outer diameter of tire │        │
        └─────────────────────────┘                │
                 │
                 ▼
   S5   ┌─────────────────────────┐
        │ Deriving wear loss of tire │
        └─────────────────────────┘
                 │
                 ▼
   S6   ┌─────────────────────────┐
        │ Estimating deterioration state │
        └─────────────────────────┘
                 │
                 ▼
   S7   ┌─────────────────────────┐
        │ Displaying estimation result │
        └─────────────────────────┘
                 │
                 ▼
          ┌─────────────┐
          │     END     │
          └─────────────┘
```

Europäisches
Patentamt

European
Patent Office

Office européen
des brevets

**EUROPEAN SEARCH REPORT**

Application Number

EP 21 17 0147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2012 023021 A1 (GM GLOBAL TECH OPERATIONS INC [US]) 28 May 2014 (2014-05-28) | 1-3, 10-12 | INV. B60C11/24 |
| Y | * the whole document * | 4,7-9 | |
| A | | 6 | |
| X | WO 2019/216399 A1 (BRIDGESTONE CORP [JP]) 14 November 2019 (2019-11-14) * paragraph [0051] * | 1,10 | |
| X | US 2016/155277 A1 (ASADA HISASHI [JP] ET AL) 2 June 2016 (2016-06-02) | 1 | |
| A | * paragraph [0132] * | 4 | |
| X | CN 108 790 619 A (SHANDONG LINGLONG TYRE CO LTD) 13 November 2018 (2018-11-13) | 11,12 | |
| Y | * the whole document * | 4,7 | |
| A | | 1 | |
| Y | JP 2006 193119 A (BRIDGESTONE CORP) 27 July 2006 (2006-07-27) * figure 5 * | 8 | |
| Y | DE 10 2010 050634 A1 (WABCO GMBH [DE]) 10 May 2012 (2012-05-10) * paragraph [0011] - paragraph [0013] * | 9 | |

TECHNICAL FIELDS
SEARCHED (IPC)

B60C

The present search report has been drawn up for all claims

| Place of search | Date of completion of the search | Examiner |
|---|---|---|
| Munich | 10 September 2021 | Schork, Willi |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 17 0147

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2021

| Patent document cited in search report | Publication date | Patent family member(s) | | Publication date |
|---|---|---|---|---|
| DE 102012023021 A1 | 28-05-2014 | NONE | | |
| WO 2019216399 A1 | 14-11-2019 | EP | 3779393 A1 | 17-02-2021 |
| | | JP WO2019216399 A1 | | 27-05-2021 |
| | | US | 2021229504 A1 | 29-07-2021 |
| | | WO | 2019216399 A1 | 14-11-2019 |
| US 2016155277 A1 | 02-06-2016 | AU | 2014354005 A1 | 16-06-2016 |
| | | CA | 2892901 A1 | 28-05-2015 |
| | | CN | 105992713 A | 05-10-2016 |
| | | JP | 6041979 B2 | 14-12-2016 |
| | | JP WO2015076420 A1 | | 16-03-2017 |
| | | US | 2016155277 A1 | 02-06-2016 |
| | | WO | 2015076420 A1 | 28-05-2015 |
| CN 108790619 A | 13-11-2018 | NONE | | |
| JP 2006193119 A | 27-07-2006 | NONE | | |
| DE 102010050634 A1 | 10-05-2012 | CN | 103189252 A | 03-07-2013 |
| | | DE 102010050634 A1 | | 10-05-2012 |
| | | EP | 2635472 A1 | 11-09-2013 |
| | | US | 2013211621 A1 | 15-08-2013 |
| | | WO | 2012059148 A1 | 10-05-2012 |

EPO FORM P0459

For more details about this annex : see Official Journal of the European Patent Office, No. 12/82

**REFERENCES CITED IN THE DESCRIPTION**

**Patent documents cited in the description**

- JP 2013136297 A
- JP 2008143460 A